# EUROPEAN PATENT APPLICATION

(11) **EP 1 857 694 A1**
(43) Date of publication of application: **21.11.2007**
(21) Application number: 07251149.6
(22) Date of filing: 19.03.2007
(51) Int. Cl.: F16C 33/12, F16C 33/14, C23C 4/00, F04C 18/356, F04C 29/00

(54) **Lubricated metal bearing material**

(30) Priority: 18.05.2006 US 436826
(71) Applicant: Hamilton Sundstrand Corporation, Windsor Locks, CT 06096-1010 (US)
(72) Inventor: Nardi, Aaron T., East Granby Connecticut 06026 (US); Smith, Blair A., South Windsor Connecticut 06074 (US)
(74) Representative: Tomlinson, Kerry John

(57) **Abstract**

A method of forming a bearing coating (24) includes the steps of depositing a porous layer (26) on a substrate (22) and depositing a lubricating material (28) within pores of the porous layer. The porous layer and the lubricating material form a bearing coating on the substrate. The bearing coating includes between about 1 vol% and about 20 vol% of the lubricating material with the balance being the porous layer.

## Description

### BACKGROUND OF THE INVENTION

This invention relates to coatings and, more particularly, to anti-friction coatings for use as bearing surfaces.

Leaded bronze is used in many applications due to its good tribological performance. However, this material has mechanical property limitations and can only be used in situations where a bearing can be press fit or secured in some manner to a standard member. Leaded bronze coatings are also well known and used in a variety of bearing applications. For example, molten leaded bronze alloy is poured onto a steel substrate and diffuses into the steel to form a lubricious, high strength bearing. Due to the relatively high melting temperature of the leaded bronze alloy, use of leaded bronze coatings is limited to soft steel or steel grades having a tempering temperature above a bulk part diffusing temperature to maintain the properties of the steel.

In some arrangements, such bearings are press fit or secured to a structural component between moving parts. Often, it is desirable to fabricate the moving parts from other materials besides steel, which presents a coefficient of thermal expansion difference between the moving parts and the bearing. This may undesirably loosen the press fit or vary the concentricity between the bearing and the moving parts. Thus, an additional feature may be needed to contain the bearing and thereby mitigate the thermal expansion difference, which adds to the complexity and expense of the bearing arrangement. Additionally, there is a general desire to eliminate the use of lead because of environmental concerns.

Accordingly, there is a need for a lead-free bearing coating for use with a variety of different types of substrates, and a method for depositing the bearing coating in, for example, locations that can not be fabricated by conventional press fit techniques. This invention addresses those needs while avoiding the shortcomings and drawbacks of the prior art.

### SUMMARY OF THE INVENTION

One example method of forming a bearing coating includes depositing a porous layer on a substrate and depositing a lubricating material within pores of the porous layer. The porous layer and the lubricating material form a bearing coating on the substrate. The bearing coating includes between about 1 vol% and about 20 vol% of the lubricating material with the balance being the porous layer. The bearing coating can be comprised of multi-component mixtures of materials.

In another aspect, an example method of forming a bearing coating includes depositing first particles on a substrate to form a porous layer and depositing second particles within pores of the porous layer to form a lubricating filler. The porous layer and the lubricating filler form a bearing coating on the substrate.

One example bearing includes a substrate and a bearing coating on the substrate. The bearing coating includes a porous layer and a lubricating filler within the pores of the porous layer. Lubricating filler comprises between about 1 vol% and about 20 vol% of the bearing coating with the balance being the porous layer.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.
Figure 1 illustrates an example bearing coating deposited on a substrate.
Figure 2 illustrates example methods for depositing the bearing coating on a substrate.
Figure 3 illustrates one example application that utilizes the bearing coating.
Figure 4 illustrates another example application that utilizes the bearing coating.

### DETAILED DESCRIPTION OF THE PREFERRED EMBODIMENT

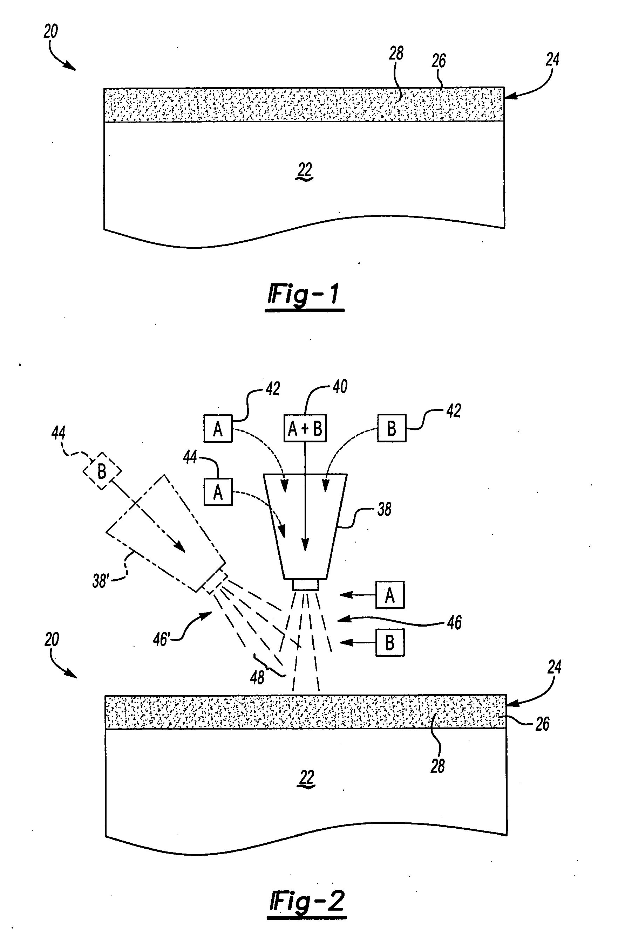

Figure 1 illustrates selected portions of an example bearing 20. In this example, the bearing 20 includes a substrate 22 and a bearing coating 24 deposited on the substrate 22. The bearing coating 24 provides an anti-friction (i.e., wear-resistant) layer on the substrate 22. This provides the benefit of protecting the substrate 22 from wear and fretting during frictional contact with an adjacent component.

In the illustrated example, the bearing coating 24 includes a porous layer 26 (white in the illustration) and a lubricating filler 28 (shaded portions in the illustration) within pores of the porous layer 26. The porous layer 26 provides the bearing coating 24 with suitable structural integrity to resist stresses applied to the bearing coating 24 during frictional contact. The lubricating filler 28 reduces friction between the bearing coating 24 and an adjacent component in frictional contact.

In the disclosed example, the porous layer 26 includes a metallic material to provide a desired structural strength. In a further example, the porous layer includes an aluminum bronze material. Aluminum bronze is harder than previously known leaded bronze coatings and thereby provides the benefit of being able to withstand greater applied stresses than leaded bronze. In another example, the porous layer 26 includes a molybdenum material. Given this description, one of ordinary skill in the art will recognize other suitable metallic materials for use in the porous layer 26.

In the disclosed example, the lubricating filler 28 includes a polymeric material. In a further example, the polymeric material includes a fluoropolymer, such as polytetrafluoroethylene, ethylenetetrafluoroethylene, or other known fluoropolymer. In another example, the polymeric material includes polyamide, polyimide, polyethylene, polypropylene or mixtures thereof. Given this description, one of ordinary skill will recognize other suitable polymeric materials for use in the lubricating filler 28.

In another example, the lubricating filler 28 includes an inorganic material. For example, the inorganic material may include tin, bismuth, antimony, indium, silver, molybdenum disulfide, graphite, calcium chloride, barium fluoride, or combinations thereof. Given this description, one of ordinary skill will recognize additional suitable inorganic materials for use in the lubricating filler 28.

In the disclosed example, the composition of the bearing coating 24 controls the lubricating effect of the lubricating filler 28 and the structural strength of the porous layer 26. For example, a relatively greater amount of the porous layer 26 relative to the amount of the lubricating filler 28 provides a greater degree of strength but less lubricating effect. Providing a relatively lower amount of the porous layer 26 and a relatively greater amount of the lubricating filler 28 provides a lower degree of strength (e.g., because of increased porosity) and a greater lubricating effect. Given this description, one of ordinary skill will recognize suitable ratios of the porous layer 26 to the lubricating filler 28 to suit their particular lubrication and structural needs.

In one example, the bearing coating 24 includes between about 1 vol% and about 20 vol% of the lubricating filler 28 with the remainder being the porous layer 26. As mentioned, compositions of the lubricating filler 28 toward the lower end of the range provide a lesser lubricating effect while compositions of the lubricating filler 28 toward the higher end of the range provide more of a lubricating effect. In a further example, the bearing coating 24 includes between about 8 vol% and about 10 vol% of the lubricating filler 28. A range of about 8 vol% to about 10 vol% provides a desirable balance between the lubricity and the strength. Other ranges may also provide desirable balances, depending on the materials selected and particular conditions within which the bearing coating 24 is intended to operate. Amounts of lubricating filler 28 less than about 1 vol % are not likely to provide much of a lubricating effect. Amounts of lubricating filler 28 greater than about 20 vol % may render the porous layer 26 too porous and weak to withstand the applied stresses in some applications.

Figure 2 schematically illustrates an example method for forming the bearing coating 24. In this example, a spray device 38 deposits first particles (represented by the letter "A") and second particles (represented by the letter "B") onto the substrate 22 to form the bearing coating 24. Alternatively, other deposition methods may be used, such as vacuum impregnation to deposit the second particles B within the pores of the porous layer 26. In the disclosed examples, the term "particles" includes powders. The first particles A form the porous layer 26 and the second particles B form the lubricating filler 28. Optionally, the substrate 22 may be masked to deposit the bearing layer 24 only on selected portions of the substrate 22.

In the illustrated example, the spray device 38 may be any of a variety of different types, such as a thermal spray device, that operates in a known manner to deposit the particles A and B onto the substrate 22. Any suitable thermal spray process may be used, such as, but not limited to, flame spray, plasma spray, high velocity oxy-fuel spray, or arc wire spray (using wires instead of powder particles). Thermal spray processing provides the benefit of reducing the heat exposure of the substrate 22 compared to some previous coating processes that utilize molten leaded bronze. Thus, a variety of different materials may be used for the substrate 22 material rather than being limited to steel. This provides the advantage of being able to coat aluminum, molybdenum, or other low melting temperature materials or low tempering temperature materials with the bearing coating 24. Alternatively, the spray device 38 is a cold spray coating device that operates in a known manner to deposit the particles A and B onto the substrate 22.

The spray device 38 may also be used in a variety of different ways to deposit the particles A and B. In one example represented at 40, the particles A and B are mixed in a desired ratio and introduced as a mixture into the spray device 38. The ratio corresponds to the desired composition of the bearing coating 24 e.g. as described above. Similarly, in another example represented at 42, the particles A and B are introduced separately into the spray device 38 in a desired ratio. In examples where the spray device 38 is a thermal spray device and the materials selected for the porous layer 26 and the lubricating filler 28 are relatively close in melting temperature, the above two methods may be used. However, if the materials have a significant difference in melting temperature, the lower melting temperature material may undesirably degrade or oxidize at the higher melting temperature of the other material.

In one example thermal spray process that avoids the above problem of degradation, the first particles A and the second particles B are introduced into a spray stream 46 of the spray device 38 rather than through the spray device 38. For example, the first particles A are introduced into the thermal spray stream 46 at a first predetermined location near the spray device 38. The second particles B are introduced into the thermal spray stream 46 at a second predetermined location that is downstream from the first position. This provides a benefit of introducing the first particles A into a hotter portion of the spray stream 46 and introducing the second particles B into a cooler portion of the thermal spray stream 46 to avoid degradation or oxidation of the material of the second particles B.

In another example represented at 44, the first particles A are introduced into the spray device 38 and the second particles B are introduced into a second spray device 38'. In this example, spray conditions (e.g., flame temperature, etc) of each spray device 38 and 38' are set in a known manner according to the material selected for the respective particles A and B. For example, the spray device 38 is set to one flame temperature and the other spray device 38' is set for a different flame temperature. This provides the benefit of co-depositing materials that may have significantly different melting points while avoiding degradation or oxidation that might occur if using a single spray device to deposit both materials. Alternatively, the spray devices 38 and 38' may be cold spray devices.

Each spray device 38 and 38' expels respective streams 46 and 46'. In the illustration, the streams 46 and 46' combine generally in an area 48 prior to impacting the substrate 22. This allows the materials from each spray device 38 and 38' to mix to produce the bearing coating 24 with a desired composition.

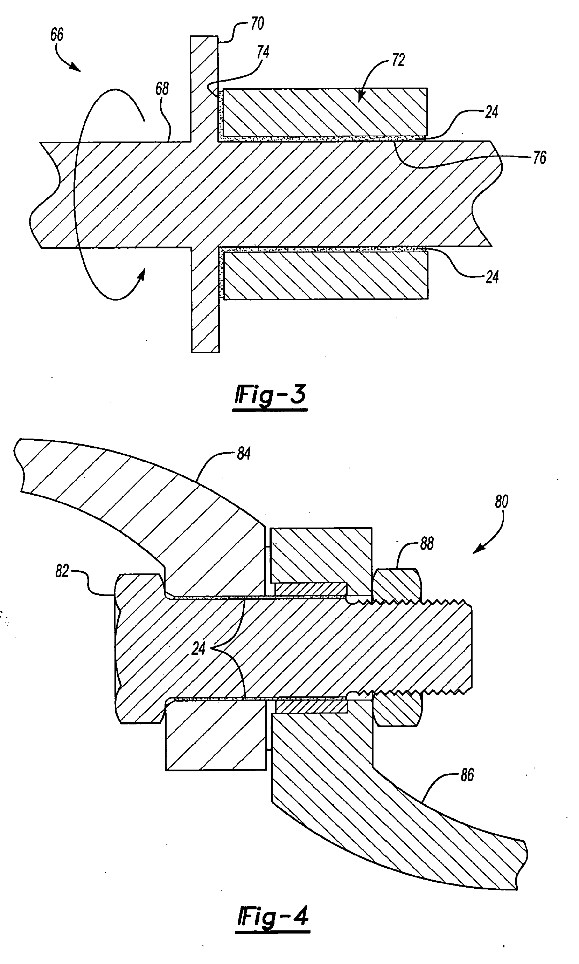

Figure 3 illustrates selected portions of one example application 66 of the bearing coating 24. In this example, the application 66 includes a rotating shaft 68 having a flange 70. A bearing 72 is disposed over the shaft adjacent the flange 70 and includes a thrust surface 74 and journal surface 76. The bearing coating 24 is disposed between the bearing 72 and the shaft 68, including the flange 70. In one example, the bearing coating 24 is deposited on the thrust surface 74 and the journal surface 76 of the bearing 72. In another example, the bearing coating 24 is deposited on the shaft 68 and flange 70. As the shaft 68 rotates, the bearing coating 24 provides wear and fretting resistance between the shaft 68 and the bearing 72.

Figure 4 illustrates selected portions of another example application 80. In this example, the application 80 includes a series of fasteners 82 (one shown) that are press-fit through a propeller hub 84 to locate and secure the hub 84 relative to a structural member 86, such as an engine flange. In the disclosed example, each fastener 82 extends through the hub 84 and the structural member 86 and is secured thereto with a nut 88. The bearing coating 24 is disposed between the fasteners 82 and the hub 84. In one example, the bearing coating 24 is deposited onto the fasteners 82. In another example, the bearing coating 24 is deposited onto the inner diameter of the hub 84. During operation, the hub 84 exerts a shear stress on the fastener 82 that results in cyclic fretting wear. The bearing coating 24 provides the benefit of wear and fretting resistance between the hub 84 and the fastener 82.

The disclosed deposition methods and bearing coating 24 provide several benefits. For one, the bearing coating 24 does not contain lead, which is a concern with some known prior bearing coatings. Additionally, the bearing coating 24 may be deposited using a variety of different spray methods, which are also conducive to depositing the bearing coating 24 on relatively complex shaped surfaces. Furthermore, thermal spray processing does not significantly heat the substrate 22. Thus, a variety of different materials may be used for the substrate 22 material rather than being limited to steel as in some prior art coatings that utilize molten leaded bronze processing. This provides the advantage of being able to coat aluminum, magnesium, high strength steels or other low melting temperature materials or low tempering temperature materials with the bearing coating 24.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of forming a coating (24), comprising:
depositing a porous layer (26) on a substrate (22); and
depositing a lubricating material (28) within pores of the porous layer such that the porous layer and the lubricating material form a bearing coating on the substrate, wherein the bearing coating (24) includes between about 1 vol% and about 20 vol% of the lubricating material and the balance the porous layer.

2. The method as recited in claim 1, including depositing a metal material to form the porous layer.

3. The method as recited in claim 2, including selecting the metal material from at least one of an aluminum bronze alloy and molybdenum.

4. The method as recited in claim 1, 2 or 3 wherein the lubricating material comprises a polymer.

5. The method as recited in claim 4, including selecting the polymer from at least one of a fluoropolymer, polyethylene, polypropylene, polyamide, or polyimide.

6. The method as recited in claim 1, 2 or 3 wherein the lubricating material comprises an inorganic material.

7. The method as recited in claim 6, including selecting the inorganic material from at least one of tin, bismuth, antimony, indium, silver, molybdenum disulfide, graphite, calcium fluoride, and barium fluoride.

8. The method as recited in any preceding claim, wherein the bearing coating includes between about 8 vol% and about 10 vol% of the lubricating filler and the balance the porous layer.

9. The method as recited in any preceding claim, comprising
depositing first particles (A) on a substrate to form a porous layer; and
depositing second particles (B) within pores of the porous layer to form a lubricating filler such that the porous layer and the lubricating filler form a bearing coating on the substrate.

10. A method of forming a coating (24), comprising:
depositing first particles (A) on a substrate to form a porous layer; and
depositing second particles (B) within pores of the porous layer to form a lubricating filler such that the porous layer and the lubricating filler form a bearing coating on the substrate.

11. The method as recited in claim 9 or 10, including co-depositing the first particles and the second particles in unison.

12. The method as recited in claim 9 or 10, including depositing the first particles with a first spray device (38) and depositing the second particles with a second, different spray device (38').

13. The method as recited in claim 12, including thermal spraying the first particles with the first spray device and thermal spraying the second particles with the second spray device.

14. The method as recited in claim 9, 10 or 11, including thermal spraying the first particles and the second particles using a thermal spray stream.

15. The method as recited in claim 14, including introducing the first particles into the thermal spray stream at a predetermined position along the thermal spray stream, and introducing the second particles into the thermal spray stream at a downstream position from the predetermined position.

16. A bearing coating produced using the method as recited in any preceding claim, wherein the substrate comprises one of a first member and a second member that are movable relative to each other, wherein the bearing coating is in direct contact with each of the first member and the second member.

17. The bearing coating as recited in claim 16, wherein the first member comprises a shaft (68) and the second member comprises a bearing (72).

18. A bearing coating as recited in claim 16 or 17, wherein the substrate comprises a rotatable shaft (68).

19. A bearing coating as recited in claim 16 or 17, wherein the substrate comprises at least one of a bearing journal surface (76) and a bearing thrust surface (74).

20. The bearing coating as recited in claim 16, wherein the first member comprises a fastener (82) and the second member comprises a propeller hub (84).

21. A bearing coating as recited in claim 16 or 20, wherein the substrate comprises a fastener (82).

22. A bearing coating as recited in claim 16 or 20, wherein the substrate comprises a propeller hub (84).

23. A bearing (20) comprising:
a substrate (22); and
a bearing coating (24) on the substrate, the bearing coating including a porous layer (26) and a lubricating filler (28) within pores of the porous layer, wherein the lubricating filler comprises between about 1 vol% and about 20 vol% of the bearing coating with the balance being the porous layer.

24. The bearing as recited in claim 23, wherein the lubricating filler comprises between about 8 vol% and about 10 vol% of the bearing coating with the balance being the porous layer.

25. The bearing as recited in claim 23 or 24, wherein the porous layer comprises a first material selected from at least one of an aluminum bronze alloy and molybdenum, and the lubricating filler comprises a second material selected from at least one of a fluoropolymer, polyethylene, polypropylene, polyamide, polyimide, tin, bismuth, antimony, indium, silver, molybdenum disulfide, graphite, calcium fluoride, and barium fluoride.
